# EUROPEAN PATENT APPLICATION

(11) **EP 4 517 971 A1**
(43) Date of publication of application: **05.03.2025**
(21) Application number: 23811958.0
(22) Date of filing: 16.03.2023
(51) Int. Cl.: H01M 50/242, H01M 50/59, H01M 10/653, H01M 10/655

(54) **BATTERY MODULE AND MANUFACTURING METHOD THEREFOR**

(30) Priority: 25.05.2022 KR 20220064230; 09.03.2023 KR 20230031429
(71) Applicant: LG Energy Solution, Ltd., Seoul 07335 (KR)
(72) Inventor: JUNG, Ki Taek, Daejeon 34122 (KR); PARK, Jun Kyu, Daejeon 34122 (KR)
(74) Representative: Plasseraud IP
(86) International application number: PCT/KR2023/003539
(87) International publication number: WO 2023/229171

(57) **Abstract**

The present invention relates to a battery module, in which a cell is swelled due to a swelling phenomenon by a gas inside the cell, which is generated as a use time increases, possibility of damaging a case of the cell is reduced to improve stability, thereby extending a lifespan, and a method for manufacturing the same.

A battery module according to the present invention may include a cell stack having a shape in which a plurality of cells are stacked, a frame in which the cell stack is accommodated, an adhesive resin disposed between a bottom surface of the cell stack and the frame so that the cell stack adheres to the frame, and a film disposed between a portion of the bottom surface of the cell stack and the adhesive resin so that adhesion between the portion of the cell stack and the adhesive resin decreases.

## Description

### TECHNICAL FIELD

### CROSS-REFERENCE TO RELATED APPLICATION

The present application claims the benefit of the priority of Korean Patent Application Nos. 10-2022-0064230, filed on May 25, 2022, and 10-2023-0031429, filed on March 09, 2023, which are hereby incorporated by reference in their entirety.

### TECHNICAL FIELD

The present invention relates to a battery module and a method for manufacturing the same, and more particularly, to a battery module including a plurality of secondary batteries and a method for manufacturing the same.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

As the need for large-capacity structures in addition to the use as an energy storage source are increasing, demands for battery packs in which a plurality of secondary batteries or battery modules are aggregated is increasing, and thus, demands for battery modules are also increasing.

As a usage time of the battery module increases, a swelling phenomenon in which a gas is generated inside a unit secondary battery constituting a battery module, and thus, the secondary battery is swelled may occur.

In the battery module according to the related art, a specific portion of the secondary battery is torn or damaged due to the swelling.

In order to solve this problem, there is a need for a battery module in which an internal secondary battery is not damaged even when the swelling phenomenon occurs.

### DISCLOSURE OF THE INVENTION

### TECHNICAL PROBLEM

The present invention has been made to solve the above problems, and an object of the present invention is to improve stability of a battery module by reducing possibility of damage of a cell even if the internal cell is swelled as a use time of the battery module increases, and a method for manufacturing the same.

### TECHNICAL SOLUTION

A battery module according to the present invention may include a cell stack having a shape in which a plurality of cells are stacked, a frame in which the cell stack is accommodated, an adhesive resin disposed between a bottom surface of the cell stack and the frame so that the cell stack adheres to the frame, and a film disposed between a portion of the bottom surface of the cell stack and the adhesive resin so that adhesion between the portion of the cell stack and the adhesive resin decreases.

The film may cover both edges of the bottom surface of the cell stack in a longitudinal direction.

The film may extend in a direction in which the plurality of cells are stacked.

The cell may include a pouch on which a sealing part is disposed, and a width of the film in a direction perpendicular to the direction, in which the plurality of cells are stacked, may be greater 4 mm or more to 6 mm or less than a width of the sealing part.

The sealing part may include a deformable part protruding toward the adhesive resin, and a width of the film in a direction perpendicular to the direction, in which the plurality of cells are stacked, may be greater 4 mm or more to 6 mm or less than a width of the deformable part.

The film is bent so that both ends thereof may be disposed on side surfaces of the cell stack.

The film may have adhesion only at both ends disposed on the side surfaces of the cell stack.

The film may include polyethylene terephthalate.

The film may be a thermal conductive film.

A method for manufacturing a battery module may include: a film placement process of disposing a film on a portion of a bottom surface of a cell stack; a resin placement process of disposing an adhesive resin between the bottom surface of the cell stack and a frame; and an insertion process of inserting the cell stack into the frame.

In the film placement process, the film may be disposed to cover both edges of the bottom surface of the cell stack in a longitudinal direction.

In the resin placement process, the adhesive resin may be applied on a bottom surface of the frame so that the adhesive resin is disposed between the bottom surface of the cell stack and the frame.

In the resin placement process, the adhesive resin may be injected through a hole formed in a bottom surface of the frame so that the adhesive resin is disposed between the bottom surface of the cell stack and the frame.

### ADVANTAGEOUS EFFECTS

The battery module according to the present invention may include the cell stack having the shape in which the plurality of cells are stacked, the frame in which the cell stack is accommodated, the adhesive resin disposed between the bottom surface of the cell stack and the frame so that the cell stack adheres to the frame, and the film disposed between the portion of the bottom surface of the cell stack and the adhesive resin so that the adhesion between the portion of the cell stack and the adhesive resin decreases.

As a result, even though the cell is swelled by the swelling phenomenon due to the gas inside the cell, which is generated while the use time of the battery module increases, the possibility of damage of the case of the cell may be reduced to improve the stability of the battery module.

In addition, the lifespan of the battery module may be extended by improving the stability.

### BRIEF DESCRIPTION OF THE DRAWINGS

FIG. 1 is a schematic exploded perspective view of a battery module according to Embodiment 1 of the present invention.
FIG. 2 is a schematic side view illustrating a state in which a cell stack, an adhesive resin, and a film are disposed inside the battery module according to Embodiment 1 of the present invention.
FIG. 3 is a schematic side view of a cell including the cell stack of the battery module according to Embodiment 1 of the present invention.
FIG. 4a is a schematic front view illustrating a state in which a cell is deformed by swelling in a battery module according to Comparative Example of the present invention.
FIG. 4b is a schematic front view illustrating a state in which the cell is deformed by swelling in the battery module according to Embodiment 1 of the present invention.
FIG. 5 is a schematic side view illustrating a state in which a cell stack, an adhesive resin, and a film are disposed inside a battery module according to Embodiment 2 of the present invention.
FIG. 6 is a schematic flowchart illustrating a method for manufacturing a battery module according to Embodiment 3 of the present invention.

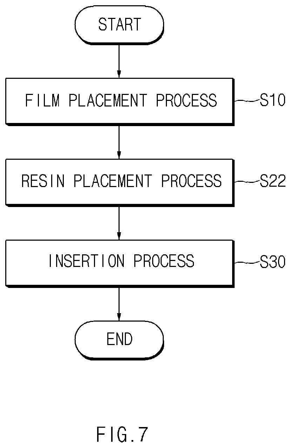

FIG. 7 is a schematic flowchart illustrating a method for manufacturing a battery module according to Embodiment 4 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

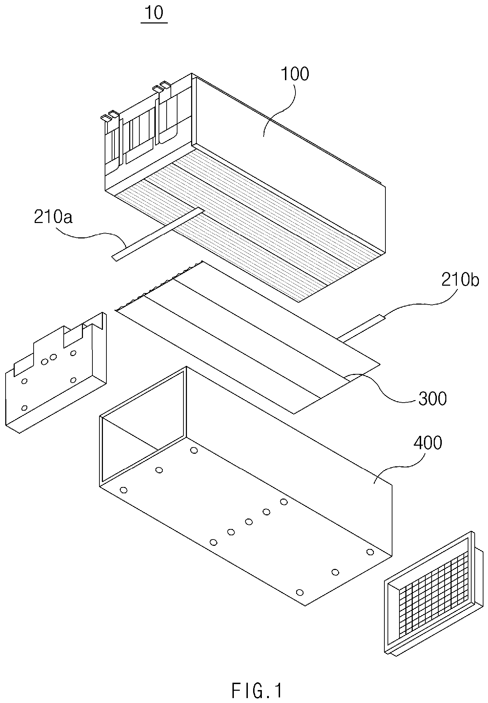

FIG. 1 is a schematic exploded perspective view of a battery module 10 according to Embodiment 1 of the present invention.

The present invention provides a battery module 10 as Embodiment 1.

The battery module 10 according to Embodiment 1 of the present invention may include a cell stack 100, a frame 400, an adhesive resin 300, and films 210a and 210b.

The cell stack 100 of the battery module 10 may be provided by stacking a plurality of cells 110. Each of the cells 110 may mean one secondary battery, and here, the cell 110 may be a pouch cell. Specifically, the cell stack 100 may be formed by stacking the plurality of cells 110 side by side so as to be parallel to each other.

The cell stack 100 may generate electrical energy of the battery module 10.

The cell stack 100 may be accommodated inside the frame 400 of the battery module 10.

The frame 400 according to Embodiment 1 of the present invention may have a shape with front and rear surfaces opened, and preferably may have a substantially rectangular parallelepiped shape with front and rear surfaces opened. Here, the frame 400 may be disposed to surround top, bottom, and both side surfaces of the cell stack 100.

The cell stack 100 may be maintained in its shape inside the battery module 10 by the frame 400 and be protected from the outside.

However, the structure of the frame 400 may not be limited thereto, and the frame 400 may be a U-shaped frame including a bottom surface and two side surfaces connected to both ends of the bottom surface.

Referring to FIG. 1, the battery module 10 according to Embodiment 1 of the present invention may further include end plates disposed on front and rear surfaces of the cell stack 100 while blocking an opening of the frame 400. Since the end plate is a known configuration, a detailed description thereof will be omitted.

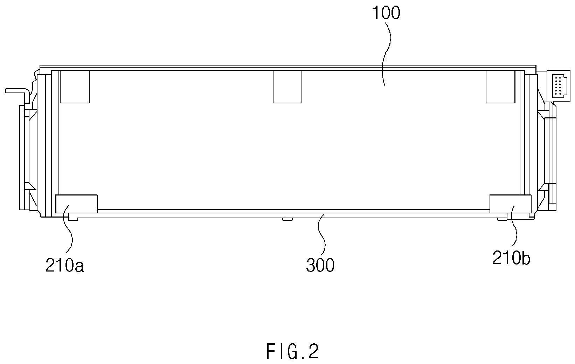

FIG. 2 is a schematic side view illustrating a state in which the cell stack 100, the adhesive resin 300, and the films 210a and 210b are disposed inside the battery module 10 according to Embodiment 1 of the present invention.

The adhesive resin 300 of the battery module 10 may be disposed between the bottom surface of the cell stack 100 and the frame 400. Specifically, the adhesive resin 300 may be disposed on a specific surface of the frame 400 facing the bottom surface of the cell stack 100.

The adhesive resin 300 may include an adhesive material having adhesion. Therefore, the adhesive resin 300 may allow the cell stack 100 and the frame 400 to adhere to each other, thereby fixing the cell stack 100.

In addition, the adhesive resin 300 may be a thermally conductive synthetic adhesive resin containing a thermally conductive material. Therefore, the adhesive resin 300 may release heat generated from the cell stack 100 to the outside of the battery module 10 because the cell 110 generates the heat according to the use of the battery module 10. A change in temperature inside the battery module 10 may be reduced through the adhesive resin 300 to improve stability of the battery module 10.

As an example of a configuration for preventing the cell 110 from being damaged, the battery module 10 according to Embodiment 1 of the present invention may include the films 210a and 210b.

The films 210a and 210b may be disposed between a portion of the bottom surface of the cell stack 100 and the adhesive resin 300 to reduce force by which the portion of the cell stack 100 is fixed by the adhesive resin 300. That is, the films 210a and 210b may reduce adhesion between the portion of the cell stack 100 and the adhesive resin 300.

In this regard, the cell 110 constituting the cell stack 100 disposed inside the battery module 10 may be a pouch cell as described above. As the use time of the pouch cell increases, a gas may be generated in the pouch cell to cause a swelling phenomenon in which the pouch is swelled.

In addition, when the swelling phenomenon occurs inside the battery module 10, as a volume of the cell 110 increases, force acting in a direction, in which adjacent stacked cells 110 are pushed against each other, may be generated.

Therefore, when the force to push the cells 110 to each other and the force to fix the cells 110 by the adhesive resin 300 act in opposite directions, the pouch of the cell 110 may be damaged. That is, according to the present invention, the films 210a and 210b may be disposed on a portion of the bottom surface of the cell stack 100, which is easily damaged, to reduce the force of fixing the cell 110 through the adhesive resin 300, thereby preventing or reducing damage of the pouch of the cell 110.

In the films 210a and 210b according to Embodiment 1 of the present invention, the force by which the films 210a and 210b are fixed to the cell stack 100 may be less than the force by which the cell stack 100 and the adhesive resin 300 are fixed to each other. Therefore, a part of the cell 110 located on the bottom surface of the cell stack 100 on which the films 210a and 210b are disposed is replaced by the force of the adhesive resin 300 to fix the cell 110 to the film 210a and 210b. Since the cell 110 receives a force to fix it, it can be moved with little force.

The films 210a and 210b may not have adhesion with the cell stack 100. That is, a portion of the cell stack 100 on which the films 210a and 210b are disposed may not undergo the fixing force.

In the battery module 10 according to Embodiment 1 of the present invention, positions at which the films 210a and 210b are disposed are described in detail as follows.

Referring to FIG. 2, the films 210a and 210b may be disposed on the bottom surface of the cell stack 100 to cover both edges of the cell stack 100 in a longitudinal direction. In addition, the films 210a and 210b may extend in the direction in which the cells 110 are stacked, and both ends of the films 210a and 210b may be bent upward.

Specifically, the films 210a and 210b may be disposed to cover a portion from an end of each of both sides of the cell stack 100 to a portion facing a center in the longitudinal direction on the bottom surface of the cell stack 100. In addition, both the ends, which are bent upward, may be disposed on portions of the side surfaces of the cell stack 100. Here, since FIG. 2 is a side view illustrating the cell stack 100 when viewed from a side, portions of the films 210a and 210b illustrated in FIG. 2 may be ends of the film 210a and 210b, which are bent upward.

As described above, when the swelling phenomenon in which the cell 110 is swelled inside the battery module 10 occurs, the force that pushes the cells 110 against each other and the force that fixes the cell 110 may be compatible, and thus, the pouch of the cell 110 may be damaged. Here, there is relatively high possibility, in which both ends of the pouch in the longitudinal direction are damaged, and thus, when the pouch is molded, this may act as a cause of deteriorating in durability due to a decrease in thickness of the edge.

Therefore, since the durability of both the edges in the longitudinal direction of the pouch of the cell 110 is weak, and thus, there is high possibility of being damaged, when the films 210a and 210b are disposed to cover both the edges in the longitudinal direction on the bottom surface of the cell stack 100, the fixing force acting between the cell stack 100 and the adhesive resin 300 at this portion may be reduced so that the cell 110 is movable to effectively prevent or reduce the damage of the pouch.

In addition, both the ends of the films 210a and 210b, which are bent upward, may be continuously disposed on the bottom of the portion even when a portion of the cell 110 moves to both the ends due to the swelling phenomenon to continuously prevent the pouch from being damaged.

Only a portion of each of the films 210a and 210b may have adhesion. For example, in the films 210a and 210b, only one end of each of the film 210a or 210b, which are bent upward, may have adhesion. That is, only a portion of each of the films 210a and 210b disposed on the portion of the side surface of the cell stack 100 may have adhesion. In this case, a portion of each of the films 210a and 210b disposed on the side surface of the cell stack 100 may adhere to the cell stack 100. Therefore, during the process of manufacturing the battery module 10, the films 210a and 210b may be easily disposed, and also, the films 210a and 210b disposed on the bottom surface of the cell stack 100 may not have the adhesion with the cell stack 100 to efficiently achieve the object of the present invention. As another example, only a portion of the films 210a and 210b disposed on the bottom surface of the cell stack 100 may have adhesion.

As an example of a configuration for reducing adhesion with a portion of the bottom surface of the cell stack 100, the films 210a and 210b of the battery module 10 according to Embodiment 1 of the present invention are made of polyethylene terephthalate.

The films 210a and 210b made of polyethylene terephthalate may facilitate movement of the cell 110 and may improve insulation performance of the corresponding portion.

The films 210a and 210b of the battery module 10 according to Embodiment 1 of the present invention may be thermally conductive films. That is, each of the films 210a and 210b may include a material with high thermal conductivity.

In this regard, in the battery module 10 according to Embodiment 1 of the present invention, a portion of the bottom surface of the cell stack 100, which is not in direct contact with the adhesive resin 300 by the arrangement of the films 210a and 210b may reduce the effect of dissipating the heat of the cell stack 100 by the adhesive resin 300. Therefore, in order to minimize the reduction in the heat dissipation effect of the cell stack 100, the films 210a and 210b including the material with the high thermal conductivity may release a portion of the heat generated in the cell stack 100.

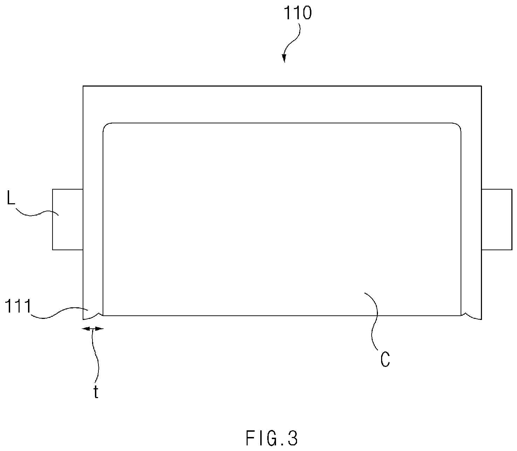

FIG. 3 is a schematic side view of the cell 110 including the cell stack 100 of the battery module 10 according to Embodiment 1 of the present invention.

As described above, the cell 110 provided in the cell stack 100 of the battery module 10 according to Embodiment 1 of the present invention may be a pouch cell. Referring to FIG. 3, the pouch of the cell 110 may include a cup part C in which an electrode assembly is disposed, and a sealing part disposed outside the cup part C so as to be sealed. Each of the films 210a and 210b according to Embodiment 1 of the present invention may have a width greater than that of the sealing part of the pouch. Specifically, each of the films 210a and 210b may have a width greater 4 mm to 6 mm than that of the sealing part. Here, the width of the sealing part may be the same as a distance from one end of the cup part C to an electrode lead L of the cell 110.

When the sealing part is sealed during the process of manufacturing the cell 110, the outermost portion of the sealing part may be deformed while the sealant layer of the pouch is pushed to the outside of the sealing part. When this portion is referred to as a deformable part 111, each of the films 210a and 210b according to Embodiment 1 of the present invention may have a width greater than a width t of the deformable part 111. Specifically, each of the films 210a and 210b may have a width greater 4 mm to 6 mm than the width t of the deformable part 111. More specifically, each of the films 210a and 210b may have a width greater 5 mm than the width t of the deformable part 111. These numerical values may be derived through experiments and may be numerical values capable of efficiently exhibiting the effects of the present invention.

FIG. 3a is a schematic front view illustrating a state in which a cell is deformed by swelling in a battery module according to Comparative Example of the present invention, and FIG. 3b is a schematic front view illustrating a state in which the cell is deformed by swelling in the battery module according to Embodiment 1 of the present invention.

Since a battery module according to Comparative Example of the present invention does not include films 210a and 210b, the films 210a and 210b may not exist between a portion of a bottom surface of a cell stack 100 and an adhesive resin 300.

Referring to FIG. 3a, when the films 210a and 210b are not disposed on the bottom surface of the cell stack 100, all of bottom surfaces of a cell 110 may be fixed by the adhesive resin 300. Thus, both edges of the relatively weak cell 110 in a longitudinal direction may also be fixed by the adhesive resin 300.

Here, due to swelling of the cell 110, the cell 110 may simultaneously undergo force acting in directions, in which the cells 100 are pushed against each other and force by which the cell 110 is fixed by the adhesive resin 300. Thus, the cell 110 may be stretched by the forces acting in opposite directions, and a portion of the pouch disposed at both edges of the relatively weak cell 110 in the longitudinal direction may be more likely to be damaged.

On the other hand, the battery module 10 according to Embodiment 1 of the present invention includes the films 210a and 210b to reduce the possibility of damage of the pouch.

Referring to FIG. 3b, a portion of the bottom surface of the cell stack 100 on which a film 210a is disposed is not fixed by the adhesive resin 300. Here, adhesion may also exist between the cell stack 100 and the film 210a, but may be less than that between the cell stack 100 and the adhesive resin 300, and when the swelling of the cell 110 occurs, the cell 110 may have weak adhesion at which the cell 110 is movable with respect to the film 210a. Here, portions of the bottom surface of the cell stack 100 may mean both edges of the bottom surface of the cell stack 100 in the longitudinal direction.

In the battery module 10 according to Embodiment 1 of the present invention, since a portion of the bottom surface of the cell stack 100 on which the film 210a is disposed is movable relative to the film 210a, the swelling of the cell 110 may causes only the force exists in the direction in which the cells 110 are pushed against each other, and the force of fixing the cells 110 may be relatively negligible.

Therefore, as illustrated in FIG. 3b, a portion of the pouch disposed on each of both the edges of the relatively weak cell 110 in the longitudinal direction may be movable relative to the film 210a and may undergo little tensile force to reduce possibility of damaging such as tearing the pouch.

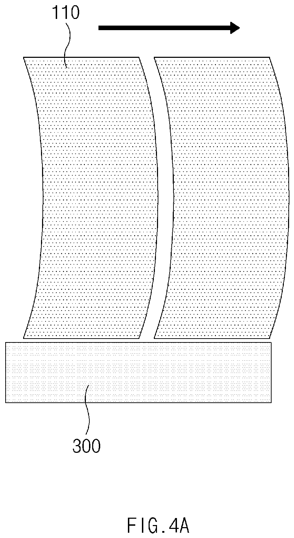

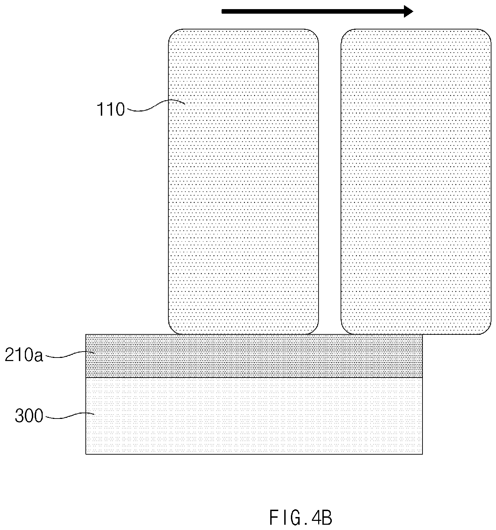

FIG. 4 is a schematic side view illustrating a state in which a cell stack 100, an adhesive resin, 300, and films 220a and 220b are disposed inside a battery module according to Embodiment 2 of the present invention.

The present invention provides a battery module having different film positions as Embodiment 2.

Hereinafter, a detailed description of the same configuration as that of the battery module 10 according to Embodiment 1 of the present invention will be omitted.

The battery module according to Embodiment 2 of the present invention may be the same as the battery module 10 according to Embodiment 1 except for positions at which the films 220a and 220b are disposed.

Referring to FIG. 4, the films 220a and 220b of the battery module according to Embodiment 2 of the present invention may be spaced a predetermined length from ends in a longitudinal direction on a bottom surface of the cell stack 100, respectively.

When the films 220a and 220b are disposed at positions corresponding to relatively weak portions of the pouch of the cell 110, since force of fixing the portions is reduced, an occurrence of an effect of reducing possibility of damaging such as tearing the pouch may be the same as in Embodiment 1. That is, even if the films 220a and 220b are not disposed to adhere to both ends of the cell stack 100 in the longitudinal direction on the bottom surface of the cell stack 100, there may be a case in which the effect of the present invention is exhibited.

In the battery modules according to Embodiments 1 and 2 of the present invention, even if the cell 110 is swelled due to the swelling phenomenon caused by the gas inside the cell 110, which is generated as the use time of the battery module increases, the possibility of damaging the case of the cell 110 may be reduced to improve the stability, thereby extending the lifespan of the battery module.

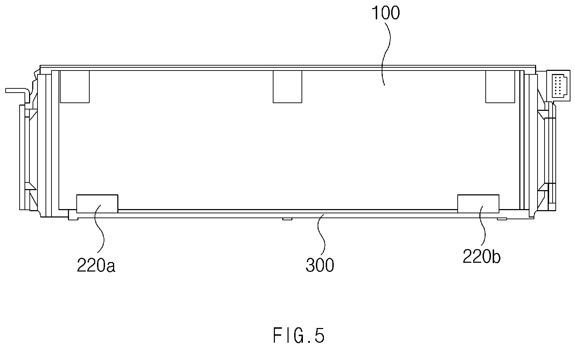

FIG. 5 is a schematic flowchart illustrating a method for manufacturing a battery module according to Embodiment 3 of the present invention.

The present invention provides a method for manufacturing a battery module as Embodiment 3.

Hereinafter, a detailed description of the same configuration as that of the battery module 10 according to Embodiment 1 of the present invention will be omitted.

A method for manufacturing a battery module according to Embodiment 3 of the present invention may include a film placement process (S10), an insertion process (S30), and a resin placement process (S21).

In the film placement process (S10), a film may be disposed on a portion of a bottom surface of a cell stack 100.

Specifically, in the film placement process (S10), the film may be disposed to cover each of both edges in a longitudinal direction on the bottom surface of the cell stack 100, thereby reducing possibility of damaging both edges of a relatively weak pouch in a longitudinal direction.

In the film placement process (S10), an adhesive material, a double-sided tape, etc. may be used on a portion of the film to fix the film, and the film may be attached to the bottom surface of the cell stack 100. Here, since adhesion of the adhesive material is weak that is enough to temporarily fix the film to the cell stack 100, a swelling phenomenon of the cell 110 may start and also may not effect movement of a portion of the cell 110 on which the film is disposed.

In the insertion process (S30), the cell stack 100 may be inserted into a frame 400, and in the resin placement process (S21), the adhesive resin (300) may be placed.

Here, in the resin placement process, a manner in which the adhesive resin 300 is disposed may vary according to a shape of the frame 400, and an order of the processes may be different.

In the method for manufacturing the battery module according to Embodiment 3 of the present invention, a case in which the frame 400 has a substantially rectangular parallelepiped shape with front and rear surfaces opened will be described.

Referring to FIG. 5, when the frame 400 has a substantially rectangular parallelepiped shape with open front and rear surfaces, the cell stack 100 to which the film is attached through the opened front or rear surface of the frame 400 in the insertion process (S30) may be disposed inside the frame 400, and then, the resin placement process (S21) may be performed. Also, in the resin placement process (S21), the adhesive resin 300 may be disposed by injecting the adhesive resin 300 through a hole formed in a bottom surface of the frame 400.

Although not shown in Embodiment 3 of the present invention, the method for manufacturing the battery module may additionally include a process of assembling an end plate or the like.

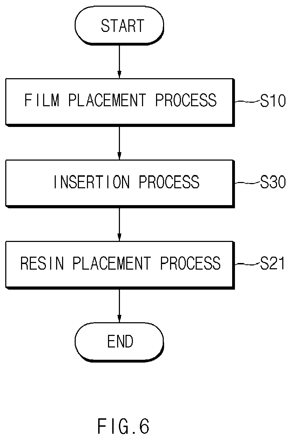

FIG. 6 is a schematic flowchart illustrating a method for manufacturing a battery module according to Embodiment 4 of the present invention.

The present invention provides another method for manufacturing a battery module as Embodiment 4.

Hereinafter, a detailed description of the same process as the method for manufacturing the battery module according to Embodiment 3 of the present invention will be omitted.

A method for manufacturing a battery module according to Embodiment 4 of the present invention may include a film placement process (S10), a resin placement process (S22), and an insertion process (S30).

Referring to FIG. 6, in the method for manufacturing the battery module according to Embodiment 4 of the present invention, a type of the resin placement process (S22) and an order of the insertion process (S30) may be different from those of the method for manufacturing the battery module according to Embodiment 3.

In the method for manufacturing the battery module according to Embodiment 4 of the present invention, a case in which a frame has a U-shape will be described.

In the method for manufacturing the battery module according to Embodiment 4 of the present invention, since the frame of the battery module has the U-shape when viewed from the front in addition to the bottom and both sides, the resin placement process (S22) may be performed, and then, the insertion process (S30) may be performed.

Specifically, in the resin placement process (S22), the adhesive resin 300 may be disposed by applying an adhesive resin 300 to a bottom surface of a frame 400. Since a top surface of the frame is opened, the adhesive resin 300 may be easily disposed in this manner.

Therefore, in the resin placement process (S22) according to Embodiment 4 of the present invention, the adhesive resin 300 may be evenly disposed on the bottom surface of the frame 400.

After the applying of the adhesive resin 300, the insertion process (S30) may be performed, and in the insertion process (S30), a cell stack 100 to which a film is attached may be disposed on a top surface of the adhesive resin 300 through an opened top surface of a frame 400.

Although not shown in Embodiment 4 of the present invention, the method for manufacturing the battery module may additionally include a process of assembling an end plate or the like.

According to the method for manufacturing the battery module according to Embodiments 3 and 4 of the present invention, even if the cell 110 is swelled due to the swelling phenomenon caused by the gas inside the cell 110, which is generated as the use time of the battery module increases, the possibility of damaging the case of the cell 110 may be reduced to manufacture the battery module having the improved stability.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Battery module
100: Cell stack
110: Cell
111: Deformable part
210a, 210b, 220a, 220b: Film
300: Adhesive resin
400: Frame
S10: Film placement process
S21, S22: Resin placement process
S30: Insertion process

## Claims

1. A battery module comprising:
a cell stack in which a plurality of cells are stacked;
a frame in which the cell stack is accommodated;
an adhesive resin disposed between a bottom surface of the cell stack and the frame so that the cell stack adheres to the frame; and
a film disposed between a portion of the bottom surface of the cell stack and the adhesive resin so that adhesion between the portion of the cell stack and the adhesive resin decreases.

2. The battery module of claim 1, wherein the film covers both edges of the bottom surface of the cell stack in a longitudinal direction.

3. The battery module of claim 1, wherein the film extends in a direction in which the plurality of cells are stacked.

4. The battery module of claim 3, wherein the cell comprises a pouch on which a sealing part is disposed, and
a width of the film in a direction perpendicular to the direction, in which the plurality of cells are stacked, is greater 4 mm to 6 mm than a width of the sealing part.

5. The battery module of claim 4, wherein the sealing part comprises a deformable part protruding toward the adhesive resin, and
a width of the film in a direction perpendicular to the direction, in which the plurality of cells are stacked, is greater 4 mm to 6 mm than a width of the deformable part.

6. The battery module of claim 1, wherein the film is bent so that both ends thereof are disposed on side surfaces of the cell stack.

7. The battery module of claim 6, wherein the film has adhesion only at both ends disposed on the side surfaces of the cell stack.

8. The battery module of claim 1, wherein the film comprises polyethylene terephthalate.

9. The battery module of claim 1, wherein the film is a thermal conductive film.

10. A method for manufacturing a battery module, the method comprising:
a film placement process of disposing a film on a portion of a bottom surface of a cell stack;
a resin placement process of disposing an adhesive resin between the bottom surface of the cell stack and a frame; and
an insertion process of inserting the cell stack into the frame.

11. The method of claim 10, wherein, in the film placement process, the film is disposed to cover both edges of the bottom surface of the cell stack in a longitudinal direction.

12. The method of claim 10, wherein, in the resin placement process, the adhesive resin is applied on a bottom surface of the frame so that the adhesive resin is disposed between the bottom surface of the cell stack and the frame.

13. The method of claim 10, wherein, in the resin placement process, the adhesive resin is injected through a hole formed in a bottom surface of the frame so that the adhesive resin is disposed between the bottom surface of the cell stack and the frame.
